# EUROPÄISCHE PATENTSCHRIFT

(11) **EP 1 906 053 B1**
(45) Veröffentlichungstag und Bekanntmachung des Hinweises auf die Patenterteilung: **22.02.2012**
(21) Anmeldenummer: 07014371.4
(22) Anmeldetag: 21.07.2007
(51) Int. Cl.: F16H 48/10, F16H 48/22, F16H 48/28, F16H 48/30

(54) **Selbstsperrendes Differenzialgetriebe**
Self-locking differential
Engrenage différentiel autobloquant

(30) Priorität: 28.09.2006 DE 102006046096
(43) Veröffentlichungstag der Anmeldung: 02.04.2008
(73) Patentinhaber: Volkswagen Aktiengesellschaft, 38436 Wolfsburg (DE)
(72) Erfinder: Zeise, Dirk, 34127 Kassel (DE)

(56) Entgegenhaltungen:
- WO-A1-2006/024306
- DE-A1- 10 147 681
- DE-A1- 10 353 415
- US-A- 5 472 385

## Beschreibung

Die Erfindung betrifft ein selbstsperrendes Differenzialgetriebe eines Kfz-Antriebsstrangs, mit einem mit einem Antriebselement in Triebverbindung stehenden und mehrere drehbare Ausgleichsräder tragenden Differenzialkorb, mit zwei jeweils mit einer Abtriebswelle drehfest verbundenen und über die Ausgleichsräder miteinander gekoppelten Abtriebsrädern, und mit zumindest einer zwischen einem der Abtriebsräder und dem Differenzialkorb angeordneten und durch das betreffende Abtriebsrad betätigbaren Reibungsbremse.

Ein Differenzialgetriebe hat die Funktion, ein an einem Antriebselement, wie einer Antriebswelle oder einem Antriebsritzel, anliegenden Antriebsmoment auf zwei Abtriebswellen zu verteilen und dabei einen Drehzahlausgleich zwischen den beiden Abtriebswellen zu ermöglichen. Das Differenzialgetriebe kann in verschiedenen Bauarten, beispielsweise als Kegelraddifferenzial, als Stirnraddifferenzial oder als Planetenraddifferenzial, ausgeführt sein und weist im allgemeinen einen mehrere drehbare Ausgleichsräder tragenden Differenzialkorb und zwei jeweils mit einer Abtriebswelle drehfest verbundene und über die Ausgleichsräder miteinander gekoppelte Abtriebsräder auf, wobei die Ausgleichsräder sowohl als Übertragungselemente als auch als Ausgleichselemente wirksam sind. Bei einem Differenzialgetriebe mit stirnverzahnten Abtriebsrädern ist zur Ermöglichung der Ausgleichsfunktion eine paarweise Anordnung von jeweils zwei Ausgleichsrädern erforderlich, die mit jeweils einem der Abtriebsräder und miteinander in Verzahnungseingriff stehen.

Bei einem Kraftfahrzeug mit einer angetriebenen Fahrzeugachse wird ein Differenzialgetriebe als Achsdifferenzial zur Verteilung eines Antriebsmomentes auf die beiden Räder der Fahrzeugachse und zum Drehzahlausgleich zwischen den beiden Rädern, insbesondere bei Kurvenfahrt, verwendet. Das Antriebsmoment wird in diesem Fall symmetrisch, d.h. im Verhältnis 50% : 50%, auf die beiden Abtriebsräder und damit auf die beiden Räder der angetriebenen Fahrzeugachse verteilt. Bei einem Kraftfahrzeug mit zwei angetriebenen Achsen ist entsprechend für jede der beiden Fahrzeugachsen ein Achsdifferenzial erforderlich. Bei einem permanenten Antrieb der beiden Fahrzeugachsen wird ein zusätzliches Differenzialgetriebe als Mittendifferenzial zur Verteilung des Antriebsmomentes auf die Achsdifferenziale der beiden Fahrzeugachsen und zum Drehzahlausgleich zwischen den beiden Fahrzeugachsen benötigt. Bei einem Mittendifferenzial kann das Antriebsmoment symmetrisch ,d.h. im Verhältnis 50% : 50%, auf die beiden Abtriebsräder und damit auf die beiden angetriebenen Fahrzeugachsen verteilt werden. Zur Anpassung an unterschiedliche Achslasten und/oder zur Erzielung eines bestimmten Fahrverhaltens, wie Übersteuern oder Untersteuern, kann das Antriebsmoment durch eine entsprechende Auslegung des Mittendifferenzials jedoch auch asymmetrisch, z.B. in einem Verhältnis von 40% : 60%, auf die Vorderachse und die Hinterachse verteilt werden.

Da bei einem offenen Differenzialgetriebe das insgesamt übertragbare Drehmoment durch das angetriebene Rad bzw. die angetriebene Fahrzeugachse mit der geringsten Traktion begrenzt wird, und das Fahnrerhalten des betreffenden Kraftfahrzeugs aufgrund von Lastwechselreaktionen, die auf die Ausgleichsfunktion des Differenzialgetriebes bei Traktionsänderungen zurückzuführen sind, beeinträchtigt wird, werden Differenzialgetriebe häufig mit Sperrvorrichtungen zur Begrenzung des Drehzahlausgleichs zwischen den beiden Abtriebsrädern bzw. den beiden Abtriebswellen ausgerüstet. Um einerseits eine vollständige Sperrung der Ausgleichsfunktion zu vermeiden und andererseits den Bau-und Steuerungsaufwand so gering wie möglich zu halten, wird hierzu bevorzugt eine selbsttätig wirksame Reibungsbremse als Differenzialsperre verwendet, die zwischen zwei Bauteilen des Differenzialgetriebes, z.B. zwischen dem Differenzialkorb und einem der Abtriebsräder, angeordnet ist. Durch die Hemmung der Relativdrehung der beiden Bauteile wird die Ausgleichsfunktion des Differenzialgetriebes reduziert, wodurch das insgesamt übertragbare Drehmoment erhöht und das Fahrverhalten des Kraftfahrzeugs verbessert wird.

Ein gattungsgemäßes Differenzialgetriebe, das sowohl als Achsdifferenzial als auch als Mittendifferenzial verwendet werden kann, ist aus der DE 41 04 484 A1 bekannt. Dieses Differenzialgetriebe ist als ein Kegelraddifferenzial ausgebildet, dessen Ausgleichsräder auf in einem Differenzialkorb befestigten Achsbolzen drehbar gelagert sind. Zwischen den beiden Abtriebsrädern und dem Differenzialkorb ist jeweils eine als Lamellenbremse ausgebildete Reibungsbremse angeordnet. Ein axial äußerer Schaft der Abtriebsräder ist jeweils als . Innenlamellenträger und ein diesem jeweils radial gegenüberliegender Abschnitt des Differenzialkorbs als Außenlamellenträger ausgebildet. Aufgrund einer axial beweglichen Lagerung der Abtriebsräder auf den zugeordneten Abtriebswellen werden die Lamellenbremsen jeweils durch die Axialkomponenten der wirksamen Verzahnungskräfte geschlossen und damit, eine Ausgleichsbewegung zwischen den beiden Abtriebsrädern gehemmt. Da die Verzahnungskräfte proportional dem übertragenen Antriebsmoment ansteigen, erhöht sich auch die Sperrwirkung des Differenzialgetriebes proportional mit dem übertragenen Antriebsmoment.

Nachteilig an diesem bekannten selbstsperrenden Differenzialgetriebe ist neben der aufwendig zu fertigenden Verzahnung der Zahnräder, dass nur ein Teil der resultierenden Verzahnungskräfte zur Betätigung der Reibungsbremsen nutzbar ist, dass der Verzahnungswiderstand und der Verzahnungsverschleiß der Zahnräder bei Abweichungen von der auslegungsgemäßen Axialposition der Abtriebsräder stark ansteigt, und dass bauartbedingtnur eine symmetrische Verteilung des Antriebsmomentes möglich ist.

Im gattungsgemäßen Dokument WO 2006/024306 A1 wird ein Sperrdifferential mit Kronenrädern offenbart. Das Differenzialgetriebe weist zwei koaxial zur Drehachse angeordnete Wellenräder und in einem Differenzialkorb drehbar gelagerte Ausgleichsräder, die mit dem Differenzialkorb umlaufen und mit beiden Wellenrädern im Verzahnungseingriff stehen. Die Ausgleichsräder sind auf einem Zapfen aufgenommen, zwischen den Wellenrädern und dem Differenzialkorb sind Reibflächenpaarungen, insbesondere Lamellenkupplungen, vorgesehen, die drehmomentabhängig bremsende Reibungskräfte erzeugen.

Aus dem Dokument US 5,472,385 geht ein Differenzialgetriebe mit einander gegenüberliegend und koaxial angeordneten kronenverzahnten Abtriebsrädern und einer Mehrzahl von mit den Abtriebsrädern kämmenden stimverzahnten Ausgleichsrädern hervor. Die Abtriebsräder sind mit unterschiedlich großen Wälzkreisradien ausgeführt, so dass eine asymmetrische Verteilung des Drehmoments resultiert.

Im Dokument DE 103 53 415 A1 ist ein Verteilergetriebe mit Kronenradverzahnung gezeigt, wobei eine Mehrzahl von stirnverzahnten Ausgleichsrädern auf einem Zapfenstern aufgenommen sind. In einer Gruppe von Ausführungsformen nimmt eine Reibscheibenanordnung die zwischen den Wellenrädern auftretenden Axialkräfte auf und erzeugt ein Reibmoment bei relativer Drehung der Wellenräder zueinander. Dadurch wird mit zunehmenden Zahnkräften ein zunehmendes Sperrmoment in der Differenzialräderanordnung aufgebaut.

Das Dokument DE 101 47 681 A1 betrifft eine Differenzialanordnung mit Kronenwellenrädern und stirnverzahnten, auf einem Zapfen gelagerten Ausgleichsrädern. Die Ausgleichsräder sind derart ausgeführt, dass sie sich in axialer Richtung an die Verzahnung anschließende Anschlagkörper aufweisen. Dadurch wird eine Verschiebung der Ausgleichsräder in axialer Richtung verhindert.

Es ist daher das Problem der vorliegenden Erfindung, ein selbstsperrendes Differenzialgetriebe der eingangs genannten Art vorzuschlagen, das bei kompakter und kostengünstiger Bauweise eine exakter einstellbare Sperrwirkung und eine erhöhte Toleranz gegenüber einer Axialverschiebung der Abtriebsräder aufweist. Insbesondere bei einer Verwendung als Mittendifferenzial ist zudem die Möglichkeit einer asymmetrischen Verteilung des Antriebsmomentes wünschenswert.

Das Problem wird erfindungsgemäß durch ein Differenzialgetriebe mit den Merkmalen gemäß dem unabhängigen Anspruch 1 gelöst.

Vorteilhafte Ausgestaltungen und Weiterbildungen des erfindungsgemäßen Differenziatgetriebes sind Gegenstand der abhängigen Ansprüche 2 bis 10.

Die Bauart des Kronenraddifferenzials ist gegenüber dem aus der DE 41 04 484 A1 bekannten Kegelraddifferenzial geometrisch einfacher aufgebaut und kostengünstiger herstellbar. Durch zumindest eine zwischen einem der Abtriebsräder und dem Differenzialkorb angeordneten und durch das betreffende Abtriebsrad betätigbaren Reibungsbremse ist das Kronenraddifferenzial auf die gleiche Art und Weise selbstsperrend wirksam, wobei aber die Axialkomponente der Verzahnungskräfte, durch welche die Reibungskupplung drehmomentabhängig geschlossen wird, abhängig von der Verzahnungsart der Zahnräder, deutlich größer als bei einem Kegelraddifferenzial ist. Ebenfalls ist die Toleranz gegenüber einer bauartbedingt erforderlichen Abweichung der Axialposition der Abtriebsräder größer als bei einer Spiralverzahnung eines Kegelräddifferenzials. Das Kronenraddifferenzial ist an sich beispielsweise aus der EP 1 203 900 A2 bekannt, dort jedoch als ein offenes Differenzial, d.h. ohne eine Differenzialsperre, ausgeführt. Die Ausgleichsräder sind dort auf Achsbolzen drehbar gelagert, die in einem Differenzialkorb befestigt sind. Der Differenzialkorb weist zur Einleitung eines Antriebsmomentes eine Außenverzahnung zur drehfesten Verbindung mit einem Tellerrad und zur drehbaren Lagerung in einem Getriebegehäuse axial beidseitig jeweils einen Lagerschaft für die Anordnung von Wälzlagern auf. Die Größe und das Gewicht dieses bekannten Differenzialgetriebes sind daher ungünstig hoch.

Zur Reduzierung des Bauaufwandes und insbesondere zur Einsparung von Bauraum sind die Ausgleichsräder des erfindungsgemäßen Differenzialgetriebes bevorzugt in radialen Lagerbohrungen des Differenzialkorbs gleitgelagert, wobei die Wände der Lagerbohrungen axial beidseitig mit jeweils einer Öffnung zum Verzahnungseingriff der Ausgleichsräder mit jeweils einem der beiden Abtriebsräder versehen sind. Durch diese Lagerung, bei der die Ausgleichsräder mit ihren Zahnköpfen in den zylindrischen Innenwänden der Lagerbohrungen gleitgelagert sind, werden Achsbolzen eingespart und somit eine sehr kompakte Bauweise des Differenzialgetriebes erzielt. Eine derartige Lagerung von Ausgleichsrädern ist zwar prinzipiell aus der EP 1 335 151 A1 bekannt. Dort ist das Differenzialgetriebe jedoch als ein Planetenraddifferenzial mit einer achsparallelen Anordnung der Ausgleichsräder ausgebildet. Zudem sind die Ausgleichsräder dort nur abschnittsweise zwischen jeweils zwei zylindrischen Innenwandabschnitten eines Ringsteges gelagert, was besondere Vorkehrungen zur Vermeidung von Gleichlaufproblemen und erhöhtem Verschleiß erfordert.

Im Gegensatz dazu sind bei dem erfindungsgemäßen Differenzialgetriebe die Wände der Lagerbohrungen zur Lagerung der Ausgleichsräder zumindest abschnittsweise über den gesamten Umfang geschlossen, wodurch eine bessere Verteilung der Lagerkräfte in Verbindung mit einem geringeren Verschleiß der Zahnköpfe der Ausgleichsräder und der Innenwände der Lagerbohrungen sowie ein verbesserter Gleichlauf erzielt werden.

Aufgrund dieser Lagerung der Ausgleichsräder ist auch eine Geradverzahnung der Ausgleichsräder und der Abtriebsräder möglich, die vorliegend vorteilhaft verwendet wird, da dann an den Ausgleichsrädern keine Axialkomponenten und an den Abtriebsrädern keine Radialkomponenten der Verzahnungskräfte auftreten. Hierdurch ist zum einen eine Axiallagerung der Ausgleichsräder überflüssig, und es ergibt sich eine größtmögliche auf das jeweilige Abtriebsrad wirksame Axialkraftkomponente, was eine optimale drehmomentabhängige Betätigung der zugeordneten Reibungsbremse zur Folge hat. Durch eine entsprechende Ausgestaltung der Reibungsbremse kann somit eine sehr genaue Einstellung der gewünschten Sperrwirkung der Differenzialsperre erzielt werden.

Zur Erzielung einer symmetrischen statischen Drehmomentverteilung auf die beiden Abtriebswellen sind die mittleren Wälzkreisradien der Abtriebsräder und die radialen Abstände der jeweils zugeordneten Öffnungen beidseitig gleich groß ausgebildet. Dadurch heben sich die Radialkomponenten der Verzahnungskräfte unmittelbar an den Ausgleichsrädern auf.

Durch die Ausbildung des Differenzialgetriebes als Kronenraddifferenzial ist jedoch im Gegensatz zu dem Kegelraddifferenzial nach der DE 41 04 484 A1 auch eine asymmetrische Drehmomentverteilung möglich, was in der Verwendung als Mittendifferenzial von Bedeutung ist. Eine asymmetrische statische Drehmomentverteilung ist auf einfache Weise dadurch erzielbar, dass die mittleren Wälzkreisradien der Abtriebsräder und die radialen Abstände der jeweils zugeordneten Öffnungen beidseitig unterschiedlich groß ausgebildet werden. Aufgrund gleich großer Umfangskräfte wird das Antriebsmoment entsprechend dem Verhältnis der mittleren Wälzkreisradien der Abtriebsräder auf die beiden Abtriebswellen verteilt. Dadurch ist beispielsweise eine Aufteilung des Antriebsmomentes auf die Vorderachse und die Hinterachse im Verhältnis 40% : 60% möglich, wodurch ein übersteuerndes Fahrverhalten des Kraftfahrzeugs und/oder eine Anpassung der Momentenverteilung an eine höhere Achslast an der Hinterachse erreicht werden kann.

Die Reibungsbremse ist bevorzugt als eine Lamellenbremse mit einem mit dem zugeordneten. Abtriebsrad verbundenen und Innenlamellen tragenden Innenlamellenträger und mit einem mit dem Differenzialkorb verbundenen und Außenlamellen tragenden Außenlamellenträger ausgebildet ist, wobei die Lamellenbremse durch eine axial bewegliche Lagerung des Abtriebsrades betätigbar ist. Das Abtriebsrad kann dabei axial verschiebbar auf der betreffenden Abtriebswelle angeordnet sein oder bei einer axialfesten Verbindung mit der Abtriebswelle zusammen mit dieser begrenzt axial verschiebbar sein. Die Bauart der Lamellenbremse weist bei kompakten Abmessungen und kostengünstigen Bauteilen die Vorteile einer guten Dosierbarkeit des Bremsmomentes in Abhängigkeit einer axialen Anpresskraft und einer einfachen Justierbarkeit des Bremsmomentniveaus über die Auswahl entsprechender Lamellen auf.

Auch wenn dies mehr Bauteile und mehr Bauraum erfordert, ist zweckmäßig zwischen jedem der beiden Abtriebsräder und dem Differenzialkorb jeweils eine. Reibungsbremse angeordnet, da sich hierdurch die als Anpresskräfte wirksamen Axialkomponenten der Verzahnungskräfte innerhalb des Differenzialkorbs gegenseitig aufheben und somit nicht über ein Festlager oder ein spezielles Axiallager gegenüber einem Getriebegehäuse abgestützt werden müssen. Im übrigen kann dadurch die Baugröße der Reibungskupplungen bei einer vorgegebenen Sperrwirkung reduziert werden.

Zur Erzeugung gleicher Bremsmomente sind die beiden Reibungsbremsen identisch ausgebildet, was bei einem Achsdifferenzial zwingend erforderlich ist, jedoch auch bei einem Mittendifferenzial mit einer symmetrischen Verteilung des Antriebsmomentes sinnvoll ist.

Zur Erzeugung verschiedener Bremsmomente können die beiden. Reibungsbremsen jedoch auch unterschiedlich ausgebildet sein. Hierdurch kann bei einem Mittendifferenzial mit asymmetrischer oder auch symmetrischer Verteilung des Antriebsmomentes auf die beiden angetriebenen Fahrzeugachsen ein gewünschtes Fahrverhalten bei Lastwechseln zwischen Traktiohsverlust und Traktionsrückgewinn an einer der beiden Fahrzeugachsen erzielt werden.

Weitere Einzelheiten der Erfindung ergeben sich aus der nachfolgenden ausführlichen Beschreibung und den beigefügten Zeichnungen, die beispielhaft zur Erläuterung der Erfindung dienen.

Hierzu zeigt:
- Fig. 1: Ein erfindungsgemäßes Differenzialgetriebe in einem Längsmittelschnitt,
- Fig. 2a: eine erste Perspektivansicht des Differenzialkorbs und der Ausgleichsräder des Differenzialgetriebes nach Fig. 1,
- Fig. 2b: eine zweite. Perspektivansicht des Differenzialkorbs und der Ausgleichsräder des Differenzialgetriebes nach Fig. 1,
- Fig. 3a: einen Längsmittelschnitt des Differenzialkorbs nach Fig. 1 mit einem Ausgleichsrad, und
- Fig. 3b: den Längsmittelschnitt des Differenzialkorbs nach Fig. 3a ohne das Ausgleichsrad.

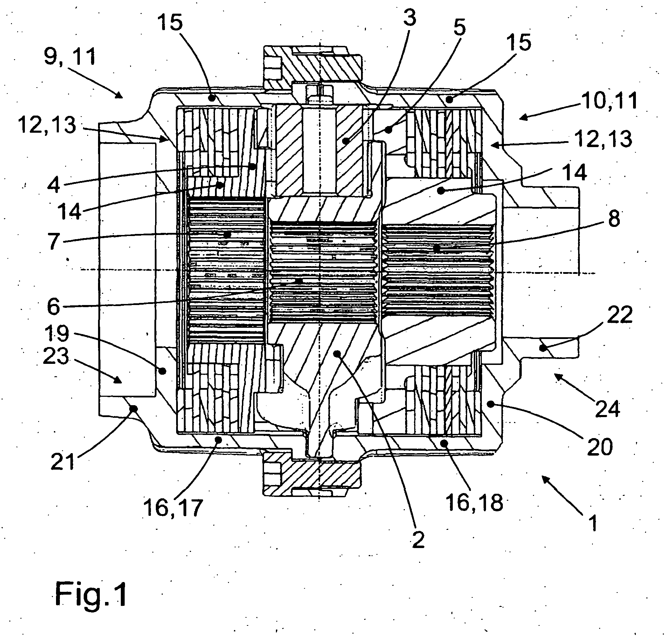

Ein selbstsperrendes Differenzialgetriebe 1, das in Fig. 1 abgebildet ist und beispielhaft das Mittendifferenzial eines mit permanentem Allradantrieb versehenen Kraftfahrzeugs bildet, ist als ein Kronenraddifferenzial mit zwei kronenverzahnten Abtriebsrädern 4, 5 und mehreren umfangsseitig verteilt angeordneten und jeweils um eine radiale geometrische Achse drehbar in einem Differenzialkorb 2 gelagerten stirnverzahnten Ausgleichsrädern 3 ausgebildet. Die beiden Abtriebsräder 4, 5 sind über einen Verzahnungseingriff mit den Ausgleichsrädern 3 mit dem Differenzialkorb 2 und miteinander gekoppelt. Ein in den Differenzialkorb 2 eingeleitetes Antriebsmoment wird somit über die Ausgleichsräder 3 auf die beiden Abtriebsräder 4, 5 verteilt. Zugleich wird durch die Ausgleichsräder 3 eine Relativdrehung der Abtriebsräder 4, 5 und somit ein Drehzahlausgleich zwischen den beiden Abtriebsrädern 4, 5 ermöglicht.

Im eingebauten Zustand des Differenzialgetriebes 1 steht der Differenzialkorb 2 über eine innere Steckverzahnung 6 drehfest mit einer vorliegend nicht abgebildeten Antriebswelle in Verbindung. Ebenso stehen die Abtriebsräder 4, 5 im eingebauten Zustand jeweils über eine innere Steckverzahnung 7, 8 drehfest mit jeweils einer nicht abgebildeten Abtriebswelle in Verbindung. Bei einer Frontanordnung der aus einem Antriebsmotor und einem Fahrgetriebe bestehenden Antriebseinheit ist das in Fig. 1 links abgebildete, antriebsseitige Abtriebsrad 4 dem Antrieb der Vorderachse und das in Fig. 1 rechts abgebildete antriebsferne Abtriebsrad 5 dem Antrieb der Hinterachse zugeordnet. Somit stellt das Differenzialgetriebe 1 vorliegend als Mittendifferenzial die Verteilung eines Antriebsmomentes auf die Vorderachse und die Hinterachse sowie einen Drehzahlausgleich zwischen den beiden Fahrzeugachsen sicher.

Zur Begrenzung der Ausgleichsfunktion ist beidseitig zwischen jedem der beiden Abtriebsräder 4, 5 und dem Differenzialkorb 2 jeweils eine als Lamellenbremse 11 ausgebildete Reibungsbremse 9, 10 angeordnet. Die Lamellenbremsen 11 umfassen jeweils axial wechselweise angeordnete Innen- und Außenlamellen 12, 13, die jeweils drehfest und axial verschiebbar in einem Innenlamellenträger 14 bzw. einem Außenlamellenträger 15 geführt'sind. Die Innenlamellenträger 14 sind vorliegend jeweils einstückig axial außen an das zugeordnete Abtriebsrad 4, 5 angeformt. Die Außenlamellenträger 15 sind vorliegend Bestandteil jeweils eines Teils 17, 18 eines zweigeteilten zylindrischen Trägerbauteils 16, das über eine Verschraubung der beiden Teile 17, 18 und einen formschlüssigen Eingriff starr mit dem Differenzialkorb 2 verbunden ist. Zur axialen Abstützung der Lamellen 12, 13 sind die beiden Teile 17, 18 des Trägerbauteils axial außen jeweils mit einem Stützflansch 19, 20 versehen. Für die Lagerung des Differenzialkorbs 2 in einem nicht näher dargestellten Getriebegehäuse weisen die beiden Teile 17, 18 des Trägerbauteils 16 jeweils axial außen einen Lagerschaft 21, 22 mit einem inneren bzw. äußeren Lagersitz 23, 24 zur Montage eines Wälzlagers auf. Die Betätigung, d.h. das Schließen der Lamellenbremsen 11 erfolgt über eine axial bewegliche Lagerung der Abtriebsräder 4, 5, die z.B. durch eine axial verschiebbare Steckverzahnung 7, 8 mit den Abtriebswellen realisiert sein kann, jeweils durch die Axialkomponenten der zwischen den Ausgleichsrädern 3 und dem betreffenden Abtriebsrad 4, 5 wirksamen Verzahnungskräfte und somit proportional dem momentan übertragenen Antriebsmoment.

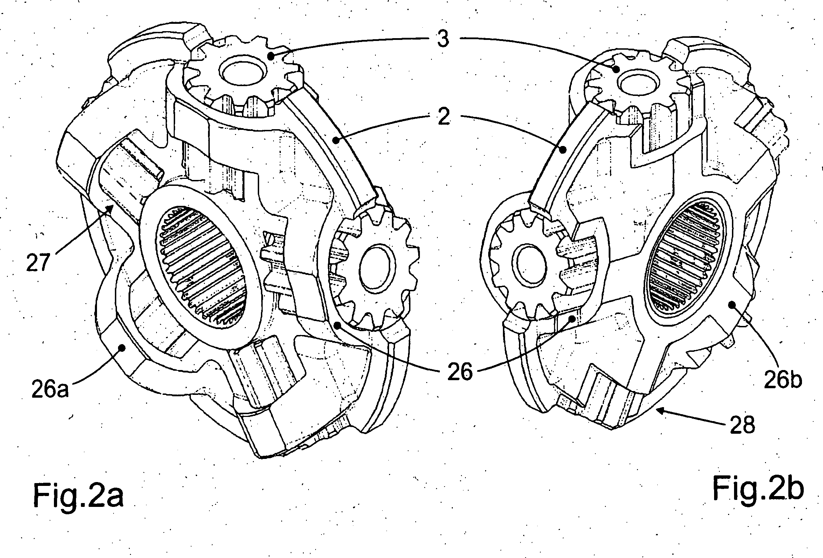

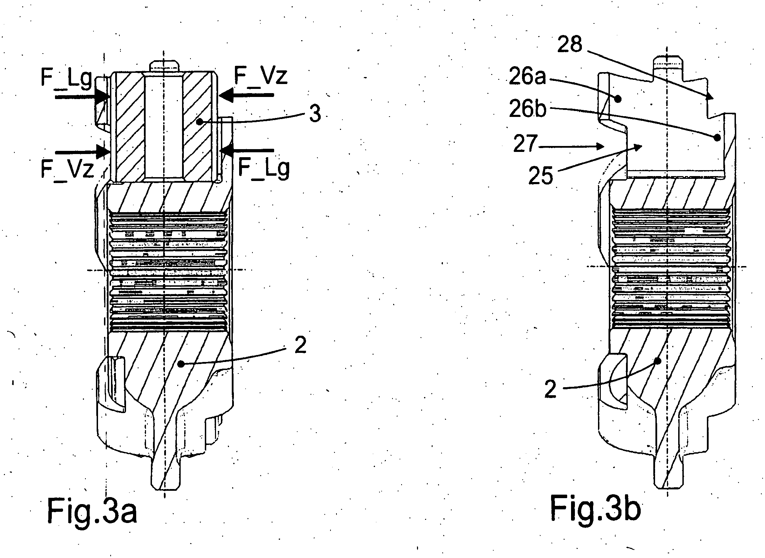

Wie in den Figuren 2a, 2b und 3a, 3b besser erkennbar ist, sind die Ausgleichsräder 3 in radialen Lagerbohrungen 25 des Differenzialkorbs 2 gleitgelagert, wobei die Wände 26 der Lagerbohrungen 25 axial beidseitig jeweils mit einer Öffnung 27, 28 zum Verzahnungseingriff mit jeweils einem der beiden Abtriebsräder 4, 5 versehen sind. Wie besonders aus den perspektivischen Ansichten der Fig. 2a von schräg vorne und der Fig. 2b von schräg hinten deutlich wird, sind die Öffnungen 27 der Lagerbohrungen 23 auf der Antriebsseite (vorne) radial weiter innen angeordnet als die Öffnungen 28 auf der antriebsfernen Seite (hinten). Entsprechend weist auch die Kronenverzahnung des antriebsseitigen Abtriebsrades 4 einen kleineren mittleren Wälzkreisradius auf als die Kronenverzahnung des antriebsfernen Abtriebsrades 5. Aufgrund beidseitig identischer Umfangskräfte wird dadurch das an dem Differenzialkorb 2 anliegende Antriebsmoment entsprechend dem Verhältnis der mittleren Wälzkreisradien der beiden Abtriebsräder 4, 5 asymmetrisch auf die beiden angetriebenen Fahrzeugachsen verteilt, vorliegend in etwa im Verhältnis von 40% : 60% auf die Vorderachse und die Hinterachse.

Wie besonders in den Figuren 3a und 3b erkennbar ist, sind die Wände 26 der Lagerbohrungen 25 zumindest abschnittsweise über den gesamten Umfang geschlossen. Hierdurch ist eine optimale Gleitlagerung der Ausgleichsräder 3 in den Lagerbohrungen 25 auch bei unterschiedlichen radialen Abständen der Öffnungen 27, 28 gegeben. Wie in Fig. 3a veranschaulicht ist, wird das Kräftepaar, das durch die auf die Ausgleichsräder 3 wirksamen radialen Verzahnungskräfte F_Vz gebildet wird, unmittelbar durch das Kräftepaar, das von den axial benachbarten Wandabschnitten 26a, 26b der Lagerbohrungen 25 auf die Ausgleichsräder 3 ausgeübten Lagerkräften F_Lg gebildet wird, ausgeglichen. Durch diese Lagerungsart der Ausgleichsräder 3 ist eine hier auch vorgesehene Geradverzahnung der Ausgleichsräder 3 und der Abtriebsräder 4, 5 möglich, die einfacher und kostengünstiger als eine Schräg- oder Spiralverzahnung herstellbar ist und aufgrund des Wegfalls von axialen Verzahnungskräften auf die Ausgleichsräder 3 höhere axiale Verzahnungskräfte auf die Abtriebsräder 4, 5 zur Betätigung der Lamellenbremsen 11 zur Folge hat. Aufgrund des dadurch gegebenen direkten Zusammenhangs zwischen dem übertragenen Antriebsmoment und den axialen Anpresskräften auf die Lamellenbremsen 11 ist auch eine bessere Justierbarkeit der gewünschten Sperrwirkung möglich.

Im Vergleich zu bekannten Ausführungen selbstsperrender Differenzialgetriebe ist das erfindungsgemäße Differenzialgetriebe 1 aufgrund eines geometrisch einfachen Aufbaus relativ kostengünstig herstellbar. Insbesondere bei Verwendung einer Geradverzahnung zwischen den Ausgleichsrädern 3 und den Abtriebsrädern 4, 5 ist die Sperrwirkung der Reibungsbremsen 9, 10 exakter einstellbar, und die Verzahnung weist eine erhöhte Toleranz gegenüber einer bauartbedingt erforderlichen Axialverschiebung der Abtriebsräder 4, 5 auf. Bei einer Verwendung des Differenzialgetriebes 1 als Mittendifferenzial ist zudem die Möglichkeit einer asymmetrischen Verteilung des Antriebsmomehtes gegeben.

### Bezugszeichenliste,

- 1: Differenzialgetriebe
- 2: Differenzialkorb
- 3: Ausgleichsrad
- 4: (antriebsseitiges) Abtriebsrad
- 5: (antriebsfernes) Abtriebsrad
- 6: Steckverzahnung
- 7: Steckverzahnung
- 8: Steckverzahnung
- 9: Reibungsbremse
- 10: Reibungsbremse
- 11: Lamellenbremse
- 12: Innenlamelle
- 13: Außenlamelle
- 14: Innenlamellenträger
- 15: Außenlamellenträger
- 16: Trägerbauteil
- 17: Teil
- 18: Teil
- 19: Stützflansch
- 20: Stützflansch
- 21: Lagerschaft
- 22: Lagerschaft
- 23: (innerer) Lagersitz
- 24: (äußerer) Lagersitz
- 25: Lagerbohrung
- 26: Wand
- 26a: Wandabschnitt
- 26b: Wandabschnitt
- 27: Öffnung
- 28: Öffnung
- F_Lg: Lagerkraft
- F_Vz: Verzahnungskraft

## Patentansprüche

1. Selbstsperrendes Differenzialgetriebe eines Kfz-Antriebsstrangs, mit einem mit einem Antriebselement in Triebverbindung stehenden Differentialkorb (2), mit mehreren umfangsseitig verteilt angeordneten und jeweils um eine radiale geometrische Achse drehbar in dem Differenzialkorb (2) gelagerten stimverzahnten Ausgleichsrädern (3), mit zwei jeweils mit einer Abtriebswelle drehfest verbundenen und über die Ausgleichsräder (3) miteinander gekoppelten kronenverzahnten Abtriebsrädern (4, 5), und mit zumindest einer zwischen einem der Abtriebsräder (4, 5) und dem Differenzialkorb (2) angeordneten und durch das betreffende Abtriebsrad (4, 5) betätigbaren Reibungsbremse (9, 10),
**dadurch gekennzeichnet**
**dass** die Ausgleichsräder (3) in radialen Lagerbohrungen (25) des Differenzialkorbs (2) gleitgelagert sind, wobei die Wände (26) der Lagerbohrungen (25) axial beidseitig mit jeweils einer Öffnung (27, 28) zum Verzahnungseingriff der Ausgleichsräder (3) mit einem der beiden Abtriebsräder (4, 5) versehen sind, die Wände (26) der Lagerbohrungen (25) zur Lagerung der Ausgleichsräder (3) zumindest abschnittsweise über den gesamten Umfang geschlossen sind und die mittleren Wälzkreisradien der Abtriebsräder (4, 5) und die radialen Abstände der jeweils zugeordneten Öffnungen (27, 28) zur Erzielung einer asymmetrischen statischen Drehmomentverteilung beidseitig unterschiedlich groß ausgebildet sind.

2. Differenzialgetriebe nach Anspruch 1,
**dadurch gekennzeichnet,**
**dass** die Ausgleichsräder (3) und die Abtriebsräder (4, 5) geradverzahnt sind.

3. Differenzialgetriebe nach Anspruch 1 oder 2,
**dadurch gekennzeichnet,**
**dass** das Differenzial ein Mittendifferenzial ist.

4. Differenzialgetriebe nach Anspruch 3,
**dadurch gekennzeichnet,**
**dass** die asymmetrische statische Drehmomentverteilung eine Aufteilung des Antriebmoments auf die Vorderachse und die Hinterachse im Verhältnis 40% : 60% ist.

5. Differenzialgetriebe nach einem der Ansprüche 1 bis 4,
**dadurch gekennzeichnet,**
**dass** die Reibungsbremse (9, 10) als eine Lamellenbremse (11) mit einem mit dem zugeordneten Abtriebsrad (4, 5) verbundenen und Innenlamellen (12) tragenden Innenlamellenträger (14) und mit einem mit dem Differenzialkorb (2) verbundenen und Außenlamellen (13) tragenden Außenlamellenträger (15) ausgebildet ist, wobei die Lamellenbremse (11) durch eine axial bewegliche Lagerung des Abtriebsrades (4, 5) betätigbar ist.

6. Differenzialgetriebe nach Anspruch 5,
**dadurch gekennzeichnet,**
**dass** das Abtriebsrad (4,5) axial verschiebbar auf der betreffenden Abtriebswelle angeordnet ist.

7. Differenzialgetriebe nach Anspruch 5.
**dadurch gekennzeichnet,**
**dass** bei einer axialfesten Verbindung mit der Abtriebswelle zusammen mit dieser begrenzt axial verschiebbar ist.

8. Differenzialgetriebe nach einem der Ansprüche 1 bis 7,
**dadurch gekennzeichnet,**
**dass** zwischen jedem der beiden Abtriebsräder (4, 5) und dem Differenzialkorb (2) jeweils eine Reibungsbremse (9, 10) angeordnet ist.

9. Differenzialgetriebe nach Anspruch 8,
**dadurch gekennzeichnet,**
**dass** die beiden Reibungsbremsen (9, 10) zur Erzeugung gleicher Bremsmomente identisch ausgebildet sind.

10. Differenzialgetriebe nach Anspruch 8,
**dadurch gekennzeichnet,**
**dass** die beiden Reibungsbremsen (9, 10) zur Erzeugung verschiedener Bremsmomente unterschiedlich ausgebildet sind.

## Claims

1. Self-locking differential gear of a motor vehicle drive train, with a differential cage (2) drive-connected to a drive element, with a plurality of spur-toothed balancing wheels (3) arranged so as to be circumferentially distributed and in each case mounted rotatably about a radial geometric axis in the differential cage (2), with two crown-toothed driven wheels (4, 5) connected fixedly in rotation in each case to a driven shaft and coupled to one another via the balancing wheels (3), and with at least one friction brake (9, 10) arranged between one of the driven wheels (4, 5) and the differential cage (2) and actuable by the respective driven wheel (4, 5), **characterized in that** the balancing wheels (3) are mounted on plane bearings in radial bearing bores (25) of the differential cage (2), the walls (26) of the bearing bores (25) being provided axially on each of the two sides with an orifice (27, 28) for the meshing engagement of the balancing wheels (3) with one of the two driven wheels (4, 5), the walls (26) of the bearing bores (25) for mounting the balancing wheels. (3) are closed at least partially over the entire circumference, and the mean rolling-circle radii of the driven wheels (4, 5) and the radial spacings of the respectively assigned orifices (27, 28) are designed to be of different size on both sides in order to achieve asymmetric static torque distribution.

2. Differential gear according to Claim 1, **characterized in that** the balancing wheels (3) and the driven wheels (4, 5) are straight-toothed.

3. Differential gear according to Claim 1 or 2, **characterized in that** the differential is a central differential.

4. Differential gear according to Claim 3, **characterized in that** the asymmetric static torque distribution is an apportionment of the drive torque to the front axle and to the rear axle in the ratio of 40%:60%.

5. Differential gear according to one of Claims 1 to 4, **characterized in that** the friction brake (9, 10) is designed as a multiple-disc brake (11) with an inner-disc carrier (14) connected to the assigned driven wheel (4, 5) and carrying inner discs (12) and with an outer-disc carrier (15) connected to the differential cage (2) and carrying outer discs (13), the multiple-disc brake (11) being actuable by means of an axially movable mounting of the driven wheel (4, 5).

6. Differential gear according to Claim 5, **characterized in that** the driven wheel (4, 5) is arranged axially displaceably on the respective driven shaft.

7. Differential gear according to Claim 5, **characterized in that**, in the case of axially fixed connection to the driven shaft, the driven wheel (4, 5) is axially displaceable together with said driven shaft to a limited extent.

8. Differential gear according to one of Claims 1 to 7, **characterized in that** in each case a friction brake (9, 10) is arranged between each of the two driven wheels (4, 5) and the differential cage (2).

9. Differential gear according to Claim 8, **characterized in that** the two friction brakes (9, 10) are designed identically in order to generate identical braking torques.

10. Differential gear according to Claim 8, **characterized in that** the two friction brakes (9, 10) are designed differently in order to generate different braking torques.

## Revendications

1. Engrenage différentiel autobloquant d'une chaîne cinématique d'un véhicule automobile, avec une coquille de différentiel (2) en liaison d'entraînement avec un élément d'entraînement, avec plusieurs roues d'équilibrage (3) à denture frontale disposées de manière répartie sur la périphérie et à chaque fois montées de manière à pouvoir tourner autour d'un axe géométrique radial dans la coquille de différentiel (2), avec deux roues de sortie (4, 5) en forme de couronnes dentées connectées de manière solidaire en rotation à chaque fois à un arbre de sortie et accouplées l'une à l'autre par le biais des roues d'équilibrage (3), et avec au moins un frein à friction (9, 10) disposé entre les roues de sortie (4, 5) et la coquille de différentiel (2) et pouvant être commandé par la roue de sortie concernée (4, 5),
**caractérisé en ce que**
les roues d'équilibrage (3) sont supportées par paliers lisses dans dès alésages de palier (25) de la coquille de différentiel (2), les parois (26) des alésages de palier (25) étant pourvues axialement de part et d'autre d'une ouverture respective (27, 28) pour l'engagement denté des roues d'équilibrage (3) avec l'une des deux roues de sortie (4, 5), les parois (26) des alésages de palier (25) pour le support sur palier des roues d'équilibrage (3) sont fermées au moins en partie sur toute la périphérie et les rayons moyens du cercle de roulement des roues de sortie (4, 5) et les distances radiales des ouvertures (27, 28) respectivement associées sont réalisés de part et d'autre avec des dimensions différentes pour produire une distribution de couple statique asymétrique.

2. Engrenage différentiel selon la revendication 1,
**caractérisé en ce que**
les roues d'équilibrage (3) et les roues de sortie (4, 5) sont des roues à denture droite.

3. Engrenage différentiel selon la revendication 1 ou 2,
**caractérisé en ce que**
le différentiel est un différentiel central.

4. Engrenage différentiel selon la revendication 3,
**caractérisé en ce que**
la distribution de couple statique asymétrique est une division du couple d'entraînement entre l'essieu avant et l'essieu arrière suivant un rapport de 40% : 60%.

5. Engrenage différentiel selon l'une quelconque des revendications 1 à 4,
**caractérisé en ce que**
le frein à friction (9, 10) est réalisé sous forme d'un frein à disques (11) avec un support de disques internes (14) connecté à la roue de sortie associée (4, 5) et portant des disques internes (12) et avec un support de disques externes (15) connecté à la coquille de différentiel (2) et portant des disques externes (13), le frein à disques (11) pouvant être actionné par un support sur palier déplaçable axialement de la roue de sortie (4, 5).

6. Engrenage différentiel selon la revendication 5,
**caractérisé en ce que**
la roue de sortie (4, 5) est disposée de manière déplaçable axialement sur l'arbre de sortie concerné.

7. Engrenage différentiel selon la revendication 5,
**caractérisé en ce que**
dans le cas d'une connexion fixe axialement à l'arbre de sortie, la roue de sortie peut être déplacée axialement de manière limitée conjointement avec ce dernier.

8. Engrenage différentiel selon l'une quelconque des revendications 1 à 7,
**caractérisé en ce**
**qu'**entre chacune des deux roues de sortie (4, 5) et la coquille de différentiel (2) est disposé à chaque fois un frein à friction (9, 10).

9. Engrenage différentiel selon la revendication 8,
**caractérisé en ce que**
les deux freins à friction (9, 10) sont réalisés de manière identique afin de produire des couples de freinage identiques.

10. Engrenage différentiel selon la revendication 8,
**caractérisé en ce que**
les deux freins à friction (9, 10) sont réalisés différemment de manière à produire des couples de freinage différents.
